# EUROPÄISCHE PATENTSCHRIFT

(11) **EP 0 767 554 B1**
(45) Veröffentlichungstag und Bekanntmachung des Hinweises auf die Patenterteilung: **19.11.2003**
(21) Anmeldenummer: 96114293.2
(22) Anmeldetag: 06.09.1996
(51) Int. Cl.: H04H 1/00, H04B 7/04

(54) **Rundfunkempfänger mit Radiodatensystem und zusätzlichem Empfänger**
Receiver with Radio Data System with a supplementary receiver
Récepteur avec système RDS comportant un récepteur supplémentaire

(30) Priorität: 08.09.1995 DE 19533268
(43) Veröffentlichungstag der Anmeldung: 09.04.1997
(73) Patentinhaber: BECKER GmbH, D-76307 Karlsbad (DE)
(72) Erfinder: Becker, Karl Anton, 76307 Karlsbad (DE); Bischoff, Joachim, 75120 Keltern (DE)
(74) Vertreter: Westphal, Klaus, Dipl.-Ing.

(56) Entgegenhaltungen:
- US-A- 5 159 707
- US-A- 5 351 274
- PATENT ABSTRACTS OF JAPAN vol. 018, no. 560 (E-1621), 26.Oktober 1994 & JP 06 204926 A (KENWOOD CORP), 22.Juli 1994,
- PATENT ABSTRACTS OF JAPAN vol. 018, no. 213 (E-1538), 15.April 1994 & JP 06 013924 A (KENWOOD CORP), 21.Januar 1994,
- PATENT ABSTRACTS OF JAPAN vol. 018, no. 213 (E-1538), 15.April 1994 & JP 06 013943 A (KENWOOD CORP), 21.Januar 1994,

## Beschreibung

Die vorliegende Erfindung betrifft ein Verfahren zum Betreiben eines Rundfunkempfängers gemäß den Merkmalen des Oberbegriffes des Anspruches 1 sowie einen Rundfunkempfänger gemäß den Merkmalen des Oberbegriffes des Anspruchs 8.

Solche Verfahren und Rundfunkempfänger sind z.B. aus DE 41 11 847 A oder der inhaltsgleichen US-A-5 159 707 bekannt. Dort sind mehrere Tuner über Umschalter an mehrere Antennen angeschlossen, um nach Maßgabe eines besten Empfangssignales eine der Antennen an einen Tuner zu schalten. Die Auswahl des besten Empfangssignales beruht auf einer Auswertung der aus dem Emfangssignal gewonnenen Zwischenfrequenzsignalen.

Im allgemeinen werden Rundfunkempfänger so betrieben, dass aus den Antennensignalen jeweils dasjenige mit der besten Empfangsqualität verwendet wird. Die Auswahl des besten von verschiedenen vorliegenden Antennensignalen bei Rundfunkempfängern wird als Antennendiversity bezeichnet. Bedeutung erlangt haben solche Systeme insbesondere bei Rundfunkempfängern, die in Kraftfahrzeugen eingesetzt werden, da hier die Ausrichtung der Antenne von der Fahrtrichtung des Fahrzeugs abhängt. Zur Verbesserung der Empfangsqualität werden daher mehrere Antennen in unterschiedlicher Ausrichtung im Fahrzeug verteilt angeordnet.

Es sind bereits verschiedene Rundfunkempfänger mit Antennendiversity bekannt ( siehe z.B. die einleitend genannten Dokumente DE 41 11 847 A oder US-A-5 159 707). Bei einem bekannten Empfänger werden zwei jeweils einer Antenne zugeordnete Empfangseinheiten mittels einer Steuereinheit parallel abgestimmt und aus den beiden erhaltenen Zwischenfrequenz(ZF)-Signalen dasjenige für die weitere Verarbeitung und Wiedergabe ausgewählt, das die bessere Empfangsqualität aufweist.

Ein Nachteil tritt bei diesem bekannten System auf, wenn alle Antennen eine schlechte Empfangsqualität bei der eingestellten Frequenz liefern. Zwar kann hier dann ein sogenannter Autobest-Vorgang durchgeführt werden, bei welchem eine Alternativfrequenz aufgesucht, deren Empfangsqualität ermittelt und bei Vorliegen einer besseren Empfangsqualität als die der zuvor eingestellten Frequenz auf die neue Frequenz umgeschaltet wird. Zur Prüfung von Alternativfrequenzen muss hier jedoch die Wiedergabe des Rundfunkempfängers stumm geschaltet werden, damit die Hörqualität nicht beeinträchtigt wird. Dauert der Autobest-Vorgang zu lange, so treten Lücken in der Wiedergabe auf, oder der Autobest-Vorgang muss abgebrochen werden.

Andererseits sind Rundfunkempfänger mit mehreren Empfangseinheiten bekannt, bei denen in den einzelnen Empfangseinheiten verschiedene Alternativfrequenzen eines Programms eingestellt und das Signal derjenigen Empfangseinheit wiedergegeben wird, das die beste Empfangsqualität aufweist. Mit diesem System ist es aber nicht möglich, zwischen verschiedenen Antennen zu wählen.

Der Erfindung liegt daher die Aufgabe zugrunde, ein Verfahren zum Betreiben eines Rundfunkempfängers der eingangs genannten Art und einen Rundfunkempfänger selbst anzugeben, welche einen vielfältigeren Einsatz und damit eine weitere Verbesserung der Empfangsqualität ermöglichen.

Diese Aufgabe wird verfahrensmäßig durch die Merkmale des Anspruchs 1 und schaltungsmäßig durch die Merkamle des Asnpruchs 8 gelöst.

Gemäss der Erfindung sind die Empfangseinheiten zumindest zum Teil wenigstens zeitweise auf verschiedene Frequenzen desselben Programms einstellbar. Durch Auswahl des jeweils besten Stereo-Multiplex-Signals dieser Empfangseinheiten wird ein Frequenzdiversity-Betrieb realisiert. In der übrigen Zeit werden die Empfangseinheiten auf dieselbe Frequenz eingestellt. Damit kann bei dem erfindungsgemässen Rundfunkempfänger mit zwei Empfangseinheiten wahlweise Antennendiversity- oder Frequenzdiversity-Betrieb eingestellt sein.

Erfindungsgemäss findet die Signalauswahl zwischen verschiedenen Stereo-Multiplex -Signalen und nicht, wie bei den bekannten Rundfunkempfängem, zwischen verschiedenen ZF-Signalen statt. Dadurch kann das Verfahren auf vorteilhafte Weise mit anderen empfangsverbessernden Massnahmen verknüpft werden.

So wird durch das erfindungsgemässe Verfahren der Betrieb eines Rundfunkempfängers mit Antennendiversity ermöglicht, welcher in geschickter Weise zusätzlich die Durchführung eines Autobest-Vorgangs erlaubt. Hierzu wird nach einer Ausgestaltung der Erfindung bei der Durchführung eines Autobest-Prüfvorganges das Durchschalten des STEREO-MULTIPLEX-Signals dieser Empfangseinheit blockiert bis diese Empfangseinheit auf eine gewünschte Altemativfrequenz eingestellt und deren Empfangsqualität gemessen und bewertet ist. In dieser Zeit wird das für die Wiedergabe verwendete Signal aus den übrigen vorliegenden STEREO-MULTIPLEX-Signalen ausgewählt. Der Autobest-Prüfvorgang kann auf diese Weise ohne Stummschalten der Wiedergabeeinheit durchgeführt werden, so dass die hierzu notwendigen Massnahmen entfallen können und dennoch die Hörqualität nicht beeinträchtigt wird.

Weist der Rundfunkempfänger nur zwei Empfangseinheiten auf, so wird bei der Durchführung eines Autobest-Prüfvorganges eine Empfangseinheit, und zwar diejenige, welche die bessere Empfangsqualität aufweist, auf die Wiedergabeeinheit durchgeschaltet, während die andere Empfangseinheit auf die zu prüfende Altemativfrequenz eingestellt wird.

Nach einer bevorzugten Weiterbildung der Erfindung wird stets die Qualität der auf eine Frequenz eingestellten Empfangseinheiten bestimmt und beim Absinken der Empfangsqualitäten, insbesondere die Empfangsqualität der qualitativ besten Empfangseinheit, wird der Umfang der Autobest-Prüfvorgänge erhöht. Dabei kann sowohl die Häufigkeit als auch die Tiefe oder Dauer der Prüfung der anderen alternativen Frequenzen gesteigert werden. Wird im Rahmen des Autobest-Prüfvorgangs auf die bessere Frequenz umgeschaltet, so wird das Empfangssystem anschliessend wieder in den Grundzustand übergehen, in dem alle Empfangseinheiten auf dieser einen besseren Frequenz arbeiten.Dadurch ist stets sichergestellt, dass gerade bei komplizierteren empfangskritschen Bedingungen, wie enge Täter mit vielen Richtungsänderungen, rechtzeitig auf die jeweils beste Frequenz und auf dieser Frequenz auf die beste Empfangseinheit umgeschaltet wird.

Bei Rundfunkempfängern mit mehr als zwei Empfangseinheiten braucht für die Durchführung eines Autobest-Prüfvorganges nur eine Empfangseinheit benutzt werden. Aus den STEREO-MULTIPLEX-Signalen der übrigen Empfangseinheiten wird dann wieder dasjenige mit der jeweils besten Empfangsqualität ausgewählt werden. Es liegt also weiterhin Antennendiversity vor, obwohl ein Autobest-Prüfvorgang durchgeführt wird. Die Durchführung von Autobest-Prüfvorgängen kann somit auch bei insgesamt schlechterer Empfangssituation erfolgen, ohne dass aufwendige Massnahmen erforderlich sind und ohne dass eine Beeinträchtigung der Hörqualität zu befürchten ist.

Bei Rundfunkempfangssystemen mit mehr als zwei Empfangseinheiten kann darüber hinaus neben reinem Antennendiversity- und reinem Frequenzdiversity-Betrieb auch eine Kombination aus beiden eingestellt sein.

Dies bedeutet, zwei oder mehr Empfangseinheiten sind wenigstens zeitweise auf die gleiche Frequenz eingestellt, während mindestens eine weitere Empfangseinheit zu dieser Zeit auf eine andere Frequenz desselben Programms eingestellt ist. Es ist damit eine zeitgleiche Kombination aus mehrfachem Antennendiverstity- mit mindestens einer Empfangseinheit im zusätzlichen Frequenzdiversity-Betrieb gegeben. Bei dieser gewählten Ausbildung der Erfindung ist ein Schwerpunkt auf das Antennendiversity-Konzept gelegt und wird in den Fällen durch die Steuerung des Rundfunkempfängers realisiert, wenn die von dem Antennendiversity- Betrieb zu erwartenden Vorteile einen besseren Empfang versprechen als andere Empfangskonzepte und diese erreicht werden sollen.

Dies kann aber auch bedeuten, dass zwei oder mehr Empfangseinheiten wenigstens zeitweise auf eine unterschiedliche Frequenzen desselben Programms eingestellt sind, während mindestens eine weitere Empfangseinheit zu dieser Zeit auf eine zu den unterschiedlichen Frequenzen gleiche Frequenz eingestellt ist. Es ist damit eine zeitgleiche Kombination aus mehrfachem Frequenzdiversity- mit mindestens einer Empfangseinheit im zusätzlichen Antennendiverstity-Betrieb gegeben. Bei dieser gewählten Ausbildung der Erfindung ist ein Schwerpunkt auf das Frequenzdiversity-Konzept gelegt und wird in den Fällen durch die Steuerung des Rundfunkempfängers realisiert, wenn die von dem Frequenzdiversity- Betrieb zu erwartenden Vorteile einen besseren Empfang versprechen als andere Empfangskonzepte und diese erreicht werden sollen.

Bei beiden zeitgleichen Kombinationen aus Antennendiversity- und Frequenzdiversity-Betrieb wird aus allen vorliegenden STEREO-MULTIPLEX-Signalen dann dasjenige mit der besten Empfangsqualität ausgesucht. Durch diese erweiterte Variationsmöglichkeit der Empfangskonzepeption des Rundfunkempfängers kann die Hörqualität noch weiter verbessert werden.

Das Umschalten von Antennendiversity auf Frequenzdiversity oder auf eine Mischung von beiden erfolgt bevorzugt dann, wenn zumindest die Empfangseinheit mit der besten Empfangsqualität eine vorbestimmte Mindestqualität aufweist. Hierdurch wird verhindert, dass bei insgesamt schlechter Empfangssituation, wie sie beispielsweise bei Tunnelfahrt vorliegt, ein Einbruch in der Hörqualität auftritt.

Nach einer bevorzugten Ausführungsform der Erfindung wird das STEREO-MULTIPLEX-Signal, auf das umgeschaltet werden soll, durch eine Anpassschaltung in seinem Pegel, in seiner Phasenlage oder in seiner relativen Laufzeitlage dem bisher wiedergegeben STEREO-MULTIPLEX-Signal der anderen Empfangseinheit angepasst. Wobei sich diese Anpassschaltung vorzugsweise in der Schalteinheit befindet, da hier alle STEREO-MULTIPLEX-Signal räumlich zusammengeführt sind. Durch das Anpassen ist nicht nur sichergestellt, dass das jeweils beste STEREO-MULTIPLEX-Signal ausgewählt und an die Wiedergabeeinheit weitergeleitet wird, sondern dass auch das sichere und störungsfreie also knackfreie Umschalten zwischen den einzelnen STEREO-MULTIPLEX-Signalen erreicht wird. Dadurch wird ein angenehmes Höhrempfinden des Benutzers unabhängig von den einzelnen Umschaltvorgängen gewährleistet.Durch die Verwendung einer derartigen Anpassschaltung wird es jetzt möglich, die Häufigkeit der Umschaltvorgänge zu erhöhen, ohne die ansonsten damit verbundenen negativen Umschalteffekten und die daraus folgenden Höhrempfindenverschlechterungen in Kauf nehmen zu müssen.

Als besonders vorteilhaft hat sich erwiesen, dass die Antennen und die diesen zugeordneten Empfangseinheiten über das Kraftfahrzeug verteilt angeordnet sind und über ein Bussystem insbesondere auf optischer Basis mit der Wiedergabeeinheit verbunden sind. Dadurch lassen sich die Störungen, welche durch die Übertragung des oder der demodulierten Signale hervorgerufen werden wie Störeinstrahlung durch andere elektromagnetische Signale oder ähnliches, verhindern und dadurch der Hörgenuss des Benutzers also des Fahrers oder des Beifahrers merklich verbessern. Dabei kann die Selektion des besten Niederfrequenz(NF)-Signals zentral durch die Wiedergabeeinheit erfolgen, welche alle ihr zugeführten Niederfrequenz(NF)-Signale vergleicht und das beste zur Wiedergabe auswählt.Es kann aber auch dezentral erfolgen, indem die einzelnen Antennen mit zugeordneten Empfangseinheiten die Niederfrequenz(NF)-Signate selbst und/oder Signale über die Qualität der Niederfrequenz(NF)-Signale der anderen Antennen mit zugeordneten Empfangseinheiten erhalten und dementsprechend diese fremden Signale oder die eigenen an die Wiedergabeeinheit weiterleiten. Diese dezentrale Struktur ist besonders Vorteilhaft, wenn die einzelnen Antennen mit zugeordneten Empfangseinheiten untereinander und mit der Wiedergabeeinheit über eine Ringleitung miteinander verbunden sind und über diese ihre Signale austauschen.

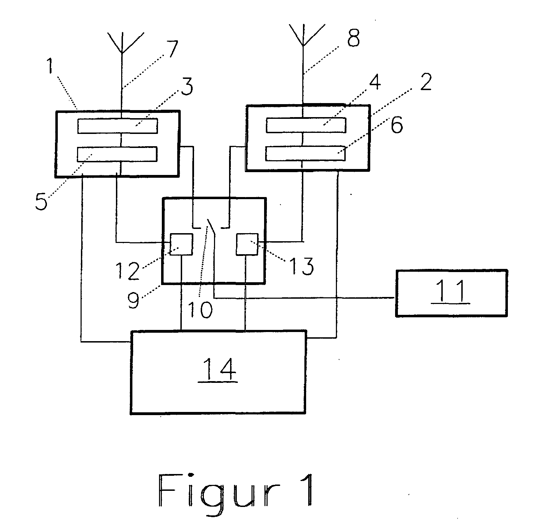

Ein Ausführungsbeispiel der Erfindung ist in der Zeichnung dargestellt und wird nachfolgend beschrieben. Die einzige Figur zeigt das Schaltprinzip eines beispielhaften, erfindungsgemässen Rundfunkempfängers.

Der dargestellte Rundfunkempfänger weist zwei als Block 1 bzw. 2 dargestellte Empfangseinheiten auf, die jeweils eine Zwischenfrequenzeinheit 3 bzw. 4 und einen STEREO-MULTIPLEX-Demodulator 5 bzw. 6 umfassen. Die beiden Empfangseinheiten 1 und 2 sind jeweils einer Rundfunkempfangsantenne 7 bzw. 8 zugeordnet.

Die von den beiden Empfangseinheiten 1 und 2 über die jeweils zugeordneten Antenne 7 bzw. 8 empfangenen Signale werden von der Zwischenfrequenzeinheit 3 bzw. 4 auf eine Zwischenfrequenz umgewandelt und anschliessend von den FM-Demodulatoren 5 bzw. 6 demoduliert. Die von den FM-Demodulatoren 5 und 6 abgegebenen STEREO-MULTIPLEX-Signale werden einer Schalteinheit 9 zugeführt, in welcher ein Schalter 10 vorhanden ist, der zwischen den beiden Signalen auswählt. Das über den Schalter 10 ausgewählte Signal wird dann von der Schalteinheit 9 an eine Wiedergabeeinheit 11 weitergeleitet.

In der Schalteinheit 9 sind Mittel 12, 13 vorhanden, um einen Qualitätsvergleich der Empfangsqualität des von den Empfangseinheiten 1 und 2 empfangenen Signals durchzuführen. Hierzu wird von den Empfangseinheiten 1 und 2 an die Schalteinheit 9 jeweils ein die Empfangsqualität des empfangenen Signals darstellendes Signal übertragen.

Schliesstich ist eine Steuereinheit 14 vorhanden, über welche die Einstellung der beiden Empfangseinheiten 1 und 2 auf eine gewünschte Empfangsfrequenz ausgeführt werden kann. Darüber hinaus kann über die Steuereinheit der Schalter 10 in der Schalteinheit 9 blockiert werden.

Zur Durchführung des Antennendiversity-Betriebes wird über die Steuereinheit 14 in den beiden Empfangseinheiten 1 und 2 eine gewünschte gemeinsame Empfangsfrequenz eingestellt. Die jeweils empfangenen Signale werden in den beiden Empfangseinheiten 1 und 2 jeweils hinsichtlich ihrer Empfangsqualität überprüft, und ein entsprechendes Qualitätssignal von den beiden Empfangseinheiten 1 und 2 an die Schalteinheit 9 gegeben. Von der Schalteinheit 9 wird der Schalter 10 so gelegt, dass das von der Empfangseinheit 1 bzw. 2 gelieferte niederfrequente Signal mit der besseren Empfangsqualität an die nachfolgende Wiedergabeeinheit 11 weitergeleitet wird.

Zur Durchführung eines Autobest-Prüfvorgangs wird über die Steuereinheit 14 der Schalter 10 in der Schalteinheit 9 blockiert. Das STEREO-MULTIPLEX-Signal der zu dieser Zeit besser empfangenden Empfangseinheit 1 oder 2 wird nun also dauernd an die Wiedergabeeinheit 11 geleitet. Die jeweils andere Empfangseinheit 1 oder 2 wird über die Steuereinheit 14 auf eine gewünschte Alternativfrequenz eingestellt und deren Empfangsqualität wird überprüft und bewertet. Liegt eine bessere Empfangsqualität vor als bei der auf die Wiedergabeeinheit 11 durchgeschalteten Empfangseinheit 1 oder 2, so wird auf die Empfangseinheit mit der besten Alternativfrequenz umgeschaltet.Anschliessend kann wieder auf Antennendiversity umgeschaltet werden, indem die andere Einheit auf die.bessere Alternativfrequenz umgeschaltet und im folgenden die beste Empfangseinheit auf dieser Frequenz ausgewählt und dann diese auf die Wiedergabeeinheit durchgeschaltet wird.

Auf diese Weise ist es möglich, ohne Stummschalten der Wiedergabeeinheit 11 einen Autobest-Prüfvorgang durchzuführen und dadurch die Hörqualität des Empfangssystems zu verbessern.

Nach demselben Prinzip können Rundfunkempfänger mit mehr als zwei Empfangseinheiten betrieben werden. Darüber hinaus kann neben Autobest gemäss dem erfindungsgemässen Verfahren auch wahlweise Frequenzdiversity betrieben werden, indem die Empfangseinheiten 1 und 2 über die Steuereinheit 14 zeitweise auf verschiedene Frequenzen eingestellt und wiederum das Signal mit der besseren Empfangsqualität an die Wiedergabeeinheit 11 gegeben wird. Bei Empfängern mit mehr als zwei Empfangseinheiten kann ein Teil der Empfangseinheiten für Antennendiversity und ein Teil für Frequenzdiversity zeitgleich verwendet werden. Dies kann auch nur zeitweise geschehen.

Insgesamt ergibt sich ein Rundfunkempfänger mit erweiterten Möglichkeiten und einer deutlich verbesserten Hörqualität.

### Bezugszeichenliste:

- 1: Empfangseinheit
- 2: Empfangseinheit
- 3: ZF-Einheit
- 4: ZF-Einheit
- 5: FM-Demodulator
- 6: FM-Demodulator
- 7: Antenne
- 8: Antenne
- 9: Schalteinheit
- 10: Schalter
- 11: Wiedergabeeinheit
- 12: Qualitätsbewertungseinheit
- 13: Qualitätsbewertungseinheit
- 14: Steuereinheit

## Patentansprüche

1. Verfahren zum Betreiben eines Rundfunkempfängers, insbesondere eines Radiodatensystem RDS-Empfängers, mit mindestens zwei Empfangseinheiten(1, 2) und einer Wiedergabeeinheit (11) und mit mindestens zwei Antennen (7, 8), wobei jeder Antenne (7, 8) eine separate Empfangseinheit (1, 2) mit Zwischenfrequenzeinheit (3, 4) und FM-Demodulator (5, 6) zugeordnet wird, und mindestens zeitweise mehrere der Empfangseinheiten (1, 2) auf dieselbe Frequenz eingestellt werden und eine oder mehrere der Empfangseinheiten (1, 2) wenigstens zeitweise auf eine oder mehrere andere Frequenzen desselben Programms-eingestellt werden,
**dadurch gekennzeichnet, dass** aus von den FM-Demodulatoren (5, 6) zur Verfügung gestellten Stereo-Multiplex-Signalen jeweils dasjenige Signal mit der besten Empfangsqualität für die Wiedergabe verwendet wird.

2. Verfahren nach Anspruch 1, **dadurch gekennzeichnet, dass** zeitgleich mehrere Empfangseinheiten auf derselben Frequenz eingestellt sind und mindestens eine andere Empfangseinheit auf eine andere Frequenz desselbens Programms eingestellt sind, wobei aus den von den den Empfangseinheiten zugeordneten FM-Demodulatoren (5, 6) zur Verfügung gestellten Stereo-Multiplex-Signalen dasjenige Signal mit der besten Empfangsqualität für die Wiedergabe verwendet wird.

3. Verfahren nach Anspruch 1, **dadurch gekennzeichnet, dass** zeitgleich mehrere Empfangseinheit auf verschiedenen Frequenzen desselbens Programms eingestellt sind und mindestens eine andere Empfangseinheiten auf derselben Frequenz wie die vorstehenden Empfangseinheiten eingestellt ist und wobei aus den von den den Empfangseinheiten zugeordneten FM-Demodulatoren (5, 6) zur Verfügung gestellten Stereo-Multiplex -Signalen dasjenige Signal mit der besten Empfangsqualität für die Wiedergabe verwendet wird.

4. Verfahren nach Anspruch 1, **dadurch gekennzeichnet, dass** zur Durchführung eines Autobest-Prüfvorganges das Durchschalten des Stereo-Multiplex -Signals der Empfangseinheit (1 oder 2) mit der jeweils schlechtesten Empfangsqualität zur Wiedergabeeinheit (11 ) blockiert, diese Empfangseinheit (1 oder 2) auf eine gewünschte Altemativfrequenz eingestellt und deren Empfangsqualität gemessen und bewertet wird, während in dieser Zeit das für die Wiedergabe verwendete Signal aus den übrigen vorliegenden Stereo-Multiplex -Signalen ausgewählt wird.

5. Verfahren nach Anspruch 4, **dadurch gekennzeichnet, dass** die Autobest-Prüfvorgänge mit abnehmender bester Empfangsqualität der Empfangseinheit (1 oder 2) in ihrem Umfang zunehmen.

6. Verfahren nach Anspruch 1, **dadurch gekennzeichnet, dass** das Einstellen verschiedener Frequenzen nur erfolgt, wenn zumindest die Empfangseinheit (1 oder 2) mit der jeweils besten Empfangsqualität eine vorbestimmte Mindestempfangsqualität aufweist.

7. Verfahren nach einem der vorstehenden Ansprüche, **dadurch gekennzeichnet, dass** die Stereo-Multiplex -Signale der einzelnen Empfangseinheiten (1,2) einer Schalteinheit (9) zugeführt werden, in der die Selektion des besten Stereo-Multiplex -Signals unter den zugeführten Stereo-Multiplex -Signalen vorgenommen wird und dieses der Wiedergabeeinheit (11 ) zugeführt wird.

8. Rundfunkempfänger zur Durchführung eines der vorstehenden Verfahren mit mehreren Empfangseinheiten (1, 2), mit einer Wiedergabeeinheit (11 ), mit mindestens zwei Antennen (7, 8), wobei jeder Antenne (7, 8) eine separate Empfangseinheit (1, 2) mit Zwischenfrequenzeinheit (3, 4) und FM-Demodulator (5, 6) zugeordnet ist, und mit einer Steuereinheit (14), welche eine Schalteinheit (9) und die Empfangseinheiten (1, 2) so steuert, dass mindestens zeitweise wenigstens ein Teil der Empfangseinheiten (1, 2) auf dieselbe Frequenz eingestellt sind und mindestens zeitweise wenigstens eine der Empfangseinheiten (1, 2) auf einer anderen Frequenz desselben Programms eingestellt sind, **dadurch gekennzeichnet, dass** ein Stereo-Multiplex-Signal von den FM-Demodulatoren (5, 6) mit der jeweils besten Empfangsqualität mit Hilfe der Schalteinheit (9) an die Wiedergabeeinheit (11) durchschaltbar ist.

9. Rundfunkempfänger nach Anspruch 8, **dadurch gekennzeichnet, dass** eine Anpassschaltung vorgesehen ist, welche eine oder mehrere der NF-Signal-Eigenschaften aus Phasenlage, Pegel oder Laufzeitlage des neu ermittelten qualitative besten Stereo-Multiplex-Signals an die Eigenschaften des bisher an die Wiedergabeeinheit (11 ) durchgeschalteten Stereo-Multiplex -Signals anpasst.

## Claims

1. Method of operating a radio receiver, in particular a radio data system RDS receiver, having at least two receiving units (1, 2) and one playback unit (11), and having at least two antennas (7, 8), wherein each antenna (7, 8) is assigned a separate receiving unit (1, 2) with intermediate frequency unit (3, 4) and FM demodulator (5, 6), and a number of the receiving units (1, 2) are tuned to the same frequency at least intermittently and one or more of the receiving units (1, 2) are tuned at least intermittently to one or more different frequencies of the same programme, **characterized in that** from stereo multiplex signals made available by the FM demodulators (5, 6), in each case that signal with the best reception quality is used for playback.

2. Method according to Claim 1, **characterized in that** a number of receiving units are tuned to the same frequency at the same time and at least one other receiving unit is tuned to a different frequency of the same programme, wherein from the stereo multiplex signals made available by the FM demodulators (5, 6) assigned to the receiving units, that signal with the best reception quality is used for playback.

3. Method according to Claim 1, **characterized in that** a number of receiving units are tuned to different frequencies of the same programme at the same time and at least one other receiving unit is tuned to the same frequency as the above receiving units, and wherein from the stereo multiplex signals made available by the FM demodulators (5, 6) assigned to the receiving units, that signal with the best reception quality is used for playback.

4. Method according to Claim 1, **characterized in that**, in order to carry out an autobest test procedure, the switching-through of the stereo multiplex signal from the receiving unit (1 or 2) with in each case the poorest reception quality to the playback unit (11) is blocked, this receiving unit (1 or 2) is tuned to a desired alternative frequency and its reception quality is measured and evaluated, and during this time the signal used for playback is selected from the other stereo multiplex signals that are present.

5. Method according to Claim 4, **characterized in that** the extent of the autobest test procedures increases as the best reception quality of the receiving unit (1 or 2) decreases.

6. Method according to Claim 1, **characterized in that** the tuning of different frequencies takes place only when at least the receiving unit (1 or 2) with in each case the best reception quality has a predetermined minimum reception quality.

7. Method according to any of the preceding claims, **characterized in that** the stereo multiplex signals of the individual receiving units (1, 2) are fed to a switching unit (9) in which the best stereo multiplex signal is selected from among the fed-in stereo multiplex signals and is fed to the playback unit (11).

8. Radio receiver for carrying out one of the above methods, having a number of receiving units (1, 2), having a playback unit (11), having at least two antennas (7, 8), wherein each antenna (7, 8) is assigned a separate receiving unit (1, 2) with intermediate frequency unit (3, 4) and FM demodulator (5, 6), and having a control unit (14) which controls a switching unit (9) and the receiving units (1, 2) in such a way that at least some of the receiving units (1, 2) are tuned to the same frequency at least intermittently and at least one of the receiving units (1, 2) is set to a different frequency of the same programme at least intermittently, **characterized in that** a stereo multiplex signal from the FM demodulators (5, 6) can be switched through with in each case the best reception quality, with the aid of the switching unit (9), to the playback unit (11).

9. Radio receiver according to Claim 8, **characterized in that** an adaptation circuit is provided which adapts one or more of the low-frequency signal properties, chosen from phase position, level or delay time, of the newly determined qualitative best stereo multiplex signal to the properties of the stereo multiplex signal switched through to the playback unit (11) up to now.

## Revendications

1. Procédé de commande d'un récepteur radiophonique notamment d'un récepteur RDS (système de données radio) ayant au moins deux unités de réception (1, 2) et une unité de reproduction ( 11) ainsi qu'au moins deux antennes (7, 8),
une unité de réception (1, 2) étant associée respectivement à chaque antenne (7, 8) avec une unité de fréquence intermédiaire (3, 4) et un démodulateur FM (5, 6) et au moins de temps à autre plusieurs des unités de réception (1, 2) sont réglées sur la même fréquence et une ou plusieurs unités de réception (1,2) sont réglées au moins de temps à autre sur une ou plusieurs autres fréquences du même programme,
**caractérisé en ce que**
parmi les signaux multiplex stéréo fournis par les démodulateurs FM (5, 6) on utilise respectivement le signal offrant la meilleure qualité de réception pour la reproduction.

2. Procédé selon la revendication 1,
**caractérisé en ce qu'**
on règle simultanément plusieurs unités de réception sur la même fréquence et on règle au moins une autre unité de réception sur l'une des autres fréquences du même programme,
et à partir des signaux multiplex stéréo fournis par les démodulateurs FM (5, 6) associés aux unités de réception on utilise le signal offrant la meilleure qualité de réception pour la reproduction.

3. Procédé selon la revendication 1,
**caractérisé en ce que**
simultanément on règle plusieurs unités de réception sur des fréquences différentes du même programme et
on règle au moins une autre unité de réception sur la même fréquence que les unités de réception précédentes et
à partir des signaux multiplex stéréo fournis par les démodulateurs FM (5, 6) associés aux unités de réception on utilise le signal offrant la meilleure qualité de réception pour la reproduction.

4. Procédé selon la revendication 1,
**caractérisé en ce que**
pour exécuter une opération de contrôle de meilleur fonctionnement automatique on bloque le passage du signal multiplex stéréo de l'unité de réception (1 ou 2) ayant la plus mauvaise qualité de réception vers l'unité de reproduction (11),
on règle cette unité de réception (1, 2) sur la fréquence alternative souhaitée et, on mesure et exploite la qualité de la réception et pendant ce temps on sélectionne comme signal pour la reproduction un signal parmi les autres signaux multiplex stéréo disponibles.

5. Procédé selon la revendication 4,
**caractérisé en ce que**
les opérations automatiques de contrôle de meilleure qualité augmentent d'importance à mesure que diminue la meilleure qualité de réception de l'unité de réception (1 ou 2).

6. Procédé selon la revendication 1,
**caractérisé en ce qu'**
on règle différentes fréquences seulement si au moins l'unité de réception (1 ou 2) avec chaque fois la meilleure qualité de réception représente une qualité de réception minimale prédéterminée.

7. Procédé selon l'une des revendications précédentes,
**caractérisé en ce qu'**
on fournit les signaux multiplex stéréo des différentes unités de réception (1, 2) à une unité de commutation (9) dans laquelle on sélectionne le meilleur signal multiplex stéréo parmi les signaux multiplex stéréo disponibles et on fournit ce signal à l'unité de reproduction (11).

8. Récepteur radiophonique pour la mise en oeuvre de l'un des procédés ci-dessus avec plusieurs unités de réception (1, 2), une unité de reproduction (11), au moins deux antennes (7, 8), une unité de réception (1, 2) avec une unité de fréquence intermédiaire (3, 4) et un démodulateur FM (5, 6) étant associé à chacune des antennes (7, 8) et une unité de commande (14) qui commande une unité de commutation (9) et les unités de réception (1, 2) pour qu'au moins de temps en temps, au moins une partie des unités de réception (1, 2) soit réglée sur la même fréquence et qu'au moins de temps en temps au moins l'une des unités de réception (1, 2) soit réglée sur une autre fréquence du même programme,
**caractérisé en ce que**
le signal multiplex stéréo des démodulateurs, FM (5, 6) offrant chaque fois la meilleure qualité de réception est transmis à l'unité de reproduction (11) par l'intermédiaire de l'unité de commutation (9).

9. Récepteur radiophonique selon la revendication 8,
**caractérisé par**
un circuit d'adaptation qui adapte une ou plusieurs caractéristiques de signal BF c'est-à-dire la phase, le niveau ou la position de temps de parcours du nouveau signal multiplex stéréophonique correspondant à la meilleure qualité obtenue, vis-à-vis des caractéristiques du signal multiplex stéréo transmis jusqu'alors à une unité de reproduction (11).
